# EUROPÄISCHE PATENTSCHRIFT

(11) **EP 2 010 422 B1**
(45) Veröffentlichungstag und Bekanntmachung des Hinweises auf die Patenterteilung: **18.08.2010**
(21) Anmeldenummer: 07724323.6
(22) Anmeldetag: 18.04.2007
(51) Int. Cl.: B60W 30/16

(54) **ASSISTENZSYSTEM FÜR KRAFTFAHRZEUGE**
ASSISTANCE SYSTEM FOR MOTOR VEHICLES
SYSTEME D'ASSISTANCE POUR VEHICULES AUTOMOBILES

(30) Priorität: 21.04.2006 DE 102006018585
(43) Veröffentlichungstag der Anmeldung: 07.01.2009
(73) Patentinhaber: Valeo Schalter und Sensoren GmbH, 74321 Bietigheim-Bissingen (DE)
(72) Erfinder: HABERLAND, Udo, 71088 Holzgerlingen (DE)
(74) Vertreter: Pothmann, Karsten
(86) Internationale Anmeldenummer: PCT/EP2007/003386
(87) Internationale Veröffentlichungsnummer: WO 2007/121902

(56) Entgegenhaltungen:
- EP-A2- 0 717 290
- US-A- 3 898 652
- US-A1- 2004 093 141
- US-A1- 2005 190 048
- US-A1- 2005 195 071
- US-B1- 6 265 968
- US-B1- 6 542 111
- US-B1- 6 674 394

## Beschreibung

Die Erfindung betrifft ein Assistenzsystem für Kraftfahrzeuge, mit einem Abstandserfassungssystem zur Bestimmung des Abstandes eines Kraftfahrzeugs zu immobilen Hindernissen, die relativ zum Kraftfahrzeug in einem seitlichen Bereich angeordnet sind, und mit einem Warnsystem zur Ausgabe eines Warnsignals bei Erfassung von mobilen Hindernissen, die relativ zum Kraftfahrzeug in einem seitlichen und/oder rückwärtigen Bereich angeordnet sind.

Derartige Assistenzsysteme dienen dazu, den Komfort und die Sicherheit eines Kraftfahrzeugs zu erhöhen. Mit dem Abstandserfassungssystem kann eine Information darüber gewonnen werden, wie weit das Kraftfahrzeug zu immobilen Hindernissen beabstandet ist, beispielsweise zu festen Bebauungen wie Wänden, Leitplanken oder auch zu Bäumen oder Buschwerk. Mit Hilfe des Warnsystems kann dem Fahrer durch Ausgabe eines Warnsignals mitgeteilt werden, dass sich in einem seitlichen und/oder rückwärtigen Bereich des Fahrzeugs ein mobiles Hindernis befindet. Das mobile Hindernis ist üblicherweise ein anderes Kraftfahrzeug, es kann aber auch ein Fahrradfahrer oder ein Fußgänger sein.

Bei den bisher bekannten Assistenzsystemen ist es nachteilig, dass sich die einzelnen Systeme, also das Abstandserfassungssystem und das Warnsystem gegenseitig in nachteiliger Weise beeinflussen können, so dass entweder die Abstandsmessung verfälscht wird oder das Warnsignal in fehlerhafter Weise ausgelöst wird.

Aus der US 6 674 394 B1 ist, gemäß dem Oberbegriff des Anspruchs 1, ein gattungsgemäßes Verfahren zum Betrieb eines Assistenzsystems bekannt, bei welchem mobile und immobile Objekte in einem hinteren Seitenbereich eines Fahrzeugs mittels eines Sensors erfasst werden. Dabei werden mehrere Objekte mittels des Sensors erfasst und das Objekt anhand der Positionen der Objektpunkte klassifiziert.

Hiervon ausgehend liegt der vorliegenden Erfindung die Aufgabe zu Grunde, ein Assistenzsystem mit verbesserter Zuverlässigkeit bei der Abstandsbestimmung zu immobilen Hindernissen zu schaffen.

Diese Aufgabe wird erfindungsgemäß dadurch gelöst, dass - bei Erfassung eines mobilen Hindernisses durch das Warnsystem - zur Bestimmung des Abstandes des Kraftfahrzeugs zu einem immobilen Hindernis nur diejenigen Informationen verwendet werden, die nicht den Winkelbereich betreffen, in dem das Warnsystem ein mobiles Hindernis erfasst hat. Mit anderen Worten: Diejenigen Informationen, die den Winkelbereich betreffen, in dem das Warnsystem ein mobiles Hindernis erfasst

hat, werden "ausgeblendet", so dass die Bestimmung des Abstandes zu den immobilen Hindernissen nicht verfälscht wird.

Das "Ausblenden" kann dadurch erreicht werden, dass die betreffenden Informationen der Auswerteeinheit nicht zugeleitet werden oder die betreffenden Informationen von der Auswerteeinheit gefiltert werden.

Es bietet sich insbesondere an, dass bei Unterschreitung eines Mindestabstandes des Kraftfahrzeugs zu einem immobilen Hindernis die Ausgabe eines Warnsignals unterdrückt wird. Bei dieser Art der Verknüpfung der Informationen der verschiedenen Systeme findet die Tatsache Berücksichtigung, dass bei Unterschreitung eines Mindestabstandes es nicht möglich ist, dass ein immobiles Hindernis zwischen das eigene Fahrzeug und das seitlich zum Fahrzeug angeordnete immobile Hindernis gerät. Wenn beispielsweise ein Mindestabstand des Kraftfahrzeugs zu einem immobilen Hindernis mit einem Meter angesetzt wird und dieses immobile Hindernis beispielsweise durch eine Leitplanke gebildet ist, ist es nicht möglich, dass zwischen das Kraftfahrzeug und die Leitplanke ein Fahrzeug gerät, das durch das Warnsystem erfasst wurde. In dieser Konstellation kann ein Warnsignal unterdrückt werden, so dass der Fahrer des Kraftfahrzeugs diesen Signalen nicht in unnötiger Weise ausgesetzt wird und denjenigen Warnsignalen, die tatsächlich ausgegeben werden, höhere Beachtung schenken kann.

Bei dem erfindungsgemäßen Assistenzsystem werden die Informationen oder Signale, die durch entsprechende Sensoren der einzelnen Systeme erfasst werden, nicht nur im Hinblick auf den jeweiligen Verwendungszweck eines einzelnen Systems ausgewertet, sondern in der Auswerteeinheit mit Informationen anderer Systeme verknüpft. Auf diese Weise ist es möglich, in bestimmten Fahrzuständen, wie dies weiter unten im Einzelnen noch erläutert werden wird, eine Abstandserfassung ohne Ergebnisverfälschung zu erreichen und ein fehlerhaftes Auslösen eines Warnsignals zu vermeiden.

Das Warnsystem kann beispielsweise ein System zur Erfassung von mobilen Hindernissen umfassen, die in einem für einen Fahrer in einem Rückspiegel des Kraftfahrzeugs nicht sichtbaren Bereich angeordnet sind. Dieser Bereich wird auch als "Toter Winkel" oder "blind spot" bezeichnet. Wenn sich in diesem Bereich Hindernisse befinden, können die diesbezüglichen Informationen verwendet werden, um die Bestimmung des Abstandes des Kraftfahrzeugs zu immobilen Hindernissen zu beeinflussen. Beispielsweise können die Informationen, die mobile Hindernisse betreffen, die sich in einem "Toten Winkel" befinden, den Informationen zur Bestimmung des Abstandes zu immobilen Hindernissen überlagert werden. Beispielsweise können die einen großen Winkelbereich betreffenden Informationen für das Abstandserfassungssystem um die Informationen eines bestimmten Winkelbereichs ("Toter Winkel") reduziert werden, so dass nur die verbleibenden Informationen zur Bestimmung des Abstands des Kraftfahrzeugs zu immobilen Hindernissen verwendet werden.

Das Warnsystem kann zusätzlich oder optional auch ein System zur Erfassung von mobilen Hindernissen umfassen, die sich aus einem rückwärtigen Bereich dem Kraftfahrzeug nähern. Ein solches System dient dazu, den Fahrer vor allen Dingen vor sich schnell nähernden Kraftfahrzeugen zu warnen. Dies ist beispielsweise der Fall, wenn sich bei einer Straße mit Rechtsverkehr das eigene Fahrzeug auf der rechten Spur einer Autobahn mit vergleichsweise niedriger Geschwindigkeit bewegt und sich auf der linken Fahrspur ein Fahrzeug mit einem hohen Geschwindigkeitsüberschuss nähert. Um auch in diesem Fall gewährleisten zu können, dass das Abstandserfassungssystem den Abstand zur Leitplanke der Autobahn zuverlässig erfasst, können die durch das Warnsystem gewonnenen Informationen den Informationen des Abstandserfassungssystems in der oben beschriebenen Weise überlagert werden.

Das Warnsystem kann zusätzlich oder optional auch weitere Systeme umfassen, beispielsweise ein System zur Unterstützung bei Spurwechseln. Ein solches System warnt den Fahrer bei einem beabsichtigten Spurwechsel vor mobilen Hindernissen, die sich auf einer Fahrspur befinden, auf die der Fahrer des Kraftfahrzeugs wechseln möchte.

Das Warnsystem kann beispielsweise auch ein System zur Vorbereitung des Kraftfahrzeugs bei einem drohenden Unfall umfassen, aber auch Komfortsysteme, wie ein Parkhilfesystem und/oder ein System zur Automatisierung von Fahr- und Bremsvorgängen. Letzteres dient dazu, im Stop-and-Go-Verkehr das Fahrzeug automatisch zu beschleunigen und abzubremsen oder bei langsamer Kolonnenfahrt mit einer angepassten Geschwindigkeit zu bewegen.

Das Abstandserfassungssystem und/oder das Warnsystem kann Radarsensoren und/oder Ultraschallsensoren umfassen. Besonders vorteilhaft ist es, wenn dem Abstandserfassungssystem und dem Warnsystem verschiedene Winkelbereichen eines Mehrstrahlradars zugeordnet sind. Hierbei sind bestimmte Winkelbereiche dem Abstandserfassungssystem und andere Winkelbereiche dem Warnsystem zugeordnet.

Es ist auch möglich, dass dem Abstandserfassungssystem und dem Warnsystem verschiedene Winkelbereiche eines Radarsystems mit einem verschwenkbaren Radarstrahl zugeordnet sind. Ein solches "scannendes" System ermöglicht es ebenfalls, den verschiedenen Systemen eigene Winkelbereiche zuzuordnen.

Dem Abstandserfassungssystem und dem Warnsystem können aber auch jeweils eigene Sensoren zugeordnet sein. Diese können gleicher oder unterschiedlicher Bauart sein.

Der Sensor oder die Sensoren des Abstandserfassungssystems und/oder des Warnsystems können in einem seitlichen Bereich des vorderen oder hinteren Stoßfängers angeordnet sein. Diese Bereiche eignen sich gut, um Sensoren in optisch unauffälliger Weise zu integrieren.

Es ist auch möglich, dass der Sensor oder die Sensoren in einem Rückspiegel des Kraftfahrzeugs oder hierzu unmittelbar benachbart angeordnet sind. Hierfür bieten sich die Außenspiegel aber auch der Innenspiegel des Fahrzeugs an. Weitere Vorteile, Merkmale und Einzelheiten der Erfindung ergeben sich aus der nachfolgenden Beschreibung, in der unter Bezugnahme auf die Zeichnung ein besonders bevorzugtes durch eine Leitplanke gebildet ist, ist es nicht möglich, dass zwischen das Kraftfahrzeug und die Leitplanke ein Fahrzeug gerät, das durch das Warnsystem erfasst wurde. In dieser Konstellation kann ein Warnsignal unterdrückt werden, so dass der Fahrer des Kraftfahrzeugs diesen Signalen nicht in unnötiger Weise ausgesetzt wird und denjenigen Warnsignalen, die tatsächlich ausgegeben werden, höhere Beachtung schenken kann.

Es ist ebenfalls möglich, dass - bei Erfassung eines mobilen Hindernisses durch das Warnsystem - zur Bestimmung des Abstandes des Kraftfahrzeugs zu einem immobilen Hindernis nur diejenigen Informationen verwendet werden, die nicht den Winkelbereich betreffen, in dem das Warnsystem ein mobiles Hindernis erfasst hat. Mit anderen Worten: Diejenigen Informationen, die den Winkelbereich betreffen, in dem das Warnsystem ein mobiles Hindernis erfasst hat, werden "ausgeblendet", so dass die Bestimmung des Abstandes zu den immobilen Hindernissen nicht verfälscht wird.

Das "Ausblenden" kann dadurch erreicht werden, dass die betreffenden Informationen der Auswerteeinheit nicht zugeleitet werden oder die betreffenden Informationen von der Auswerteeinheit gefiltert werden.

Weitere Vorteile, Merkmale und Einzelheiten der Erfindung ergeben sich aus der nachfolgenden Beschreibung, in der unter Bezugnahme auf die Zeichnung ein besonders bevorzugtes Ausführungsbeispiel im Einzelnen beschrieben ist. Dabei können die in der Zeichnung gezeigten sowie in den Ansprüchen sowie in der Beschreibung erwähnten Merkmale jeweils einzeln für sich oder in beliebiger Kombination erfindungswesentlich sein. In der Zeichnung zeigen:
- Figur 1: eine schematische Ansicht des Aufbaus eines erfindungsgemäßen Assistenzsystems;
- Figur 2: eine Draufsicht auf ein Kraftfahrzeug mit dem Assistenzsystem gemäß Figur 1; und
- Figur 3: einen Ablaufplan zur Verdeutlichung des erfindungsgemäßen Verfahrens zum Betrieb eines Assistenzsystems.

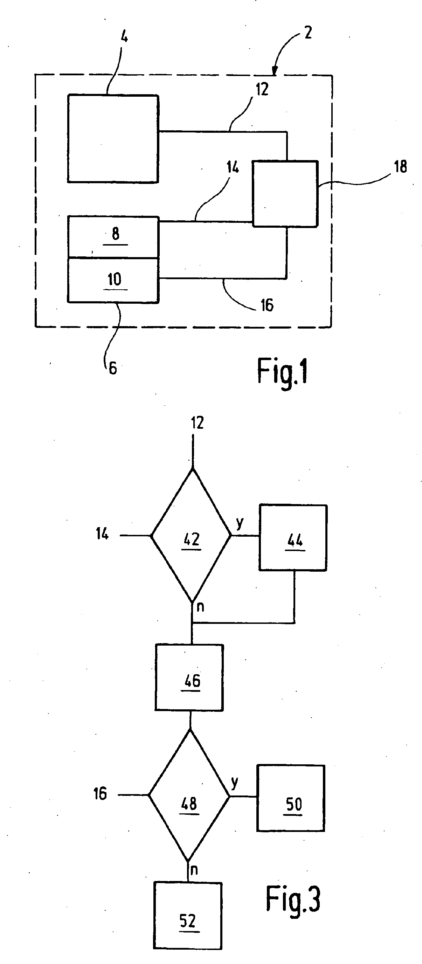

In Figur 1 ist ein Assistenzsystem für Kraftfahrzeuge insgesamt mit dem Bezugszeichen 2 bezeichnet. Dieses weist ein Abstandserfassungssystem 4 zur Bestimmung des Abstandes eines Kraftfahrzeugs zu immobilen Hindernissen auf, die relativ zum Kraftfahrzeug in einem seitlichen Bereich angeordnet sind.

Ferner umfasst das Assistenzsystem 2 ein Warnsystem 6 zur Ausgabe eines Warnsignals bei Erfassung von mobilen Hindernissen, die relativ zum Kraftfahrzeug in einem seitlichen und/oder rückwärtigen Bereich angeordnet sind.

Das Warnsystem 6 umfasst zwei Teilsysteme. Dies ist zum einen das Teilsystem 8, das zur Erfassung von mobilen Hindernissen dient, die in einem für einen Fahrer in einem Rückspiegel des Kraftfahrzeugs nicht sichtbaren Bereich angeordnet sind. Dies ist zum anderen das Teilsystem 10 zur Erfassung von mobilen Hindernissen, die sich aus einem rückwärtigen Bereich einem Kraftfahrzeug nähern.

Das Abstandserfassungssystem 4 erzeugt Informationen 12, das Teilsystem 8 Informationen 14 und das Teilsystem 10 Informationen 16. Die Informationen 12 bis 16 werden über entsprechende Datenleitungen einer gemeinsamen Auswerteeinheit 18 zugeführt.

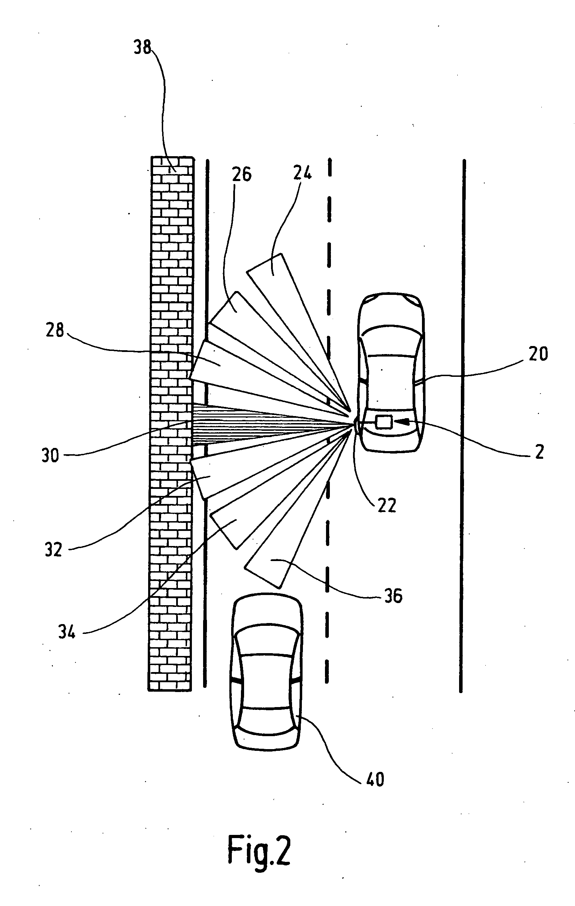

Das Assistenzsystem 2 ist in einem in Figur 2 dargestellten Kraftfahrzeug 20 angeordnet. Das Assistenzsystem 2 umfasst ferner einen Radarsensor 22, der in einem seitlichen Bereich des Kraftfahrzeugs 20 auf Höhe des hinteren Stoßfängers angeordnet ist.

Der Radarsensor 22 ist ausgebildet, um in einem großen Winkelbereich Radarsignale auszusenden und zu empfangen. In Figur 2 sind von einem vorderen seitlichen Bereich beginnend bis zu einem hinteren seitlichen Bereich mehrere Winkelbereiche 24 bis 36 dargestellt.

Mit dem Abstandserfassungssystem 4 des Assistenzsystems 2 kann ein seitlich zum Kraftfahrzeug 20 angeordneten, immobiles Hindernis 38 erfasst und der Abstand hierzu ermittelt werden. Gemäß Figur 2 ist das immobile Hindernis 38 beispielhaft als eine die Fahrbahn begrenzende Wand ausgebildet.

Mit Hilfe der Teilsysteme 8 und 10 des Warnsystems 6 können in einem seitlichen und/oder rückwärtigen Bereich des Kraftfahrzeugs 20 mobile Hindernisse erfasst werden, beispielsweise ein als weiteres Kraftfahrzeug ausgebildetes Hindernis 40.

Mit weiterem Bezug auf Figur 3 können die Informationen 12, 14 und 16 herangezogen werden, um einerseits zu erreichen, dass mit Hilfe des Abstandserfassungssystems 4 der Abstand zu immobilen Hindernissen 38 in zuverlässiger Weise erfasst werden kann und um andererseits zu erreichen, dass das Warnsystem 6 nicht in unerwünschter Weise Warnsignale abgibt.

Beispielsweise kann in einem Schritt 42 abgefragt werden, ob das Teilsystem 8 in einem Betriebszustand ist, in dem normalerweise ein Warnsignal ausgegeben wird. Hierfür wird die Information 14 herangezogen. Ist dies der Fall (y = yes gemäß Figur 3) kann in einem Schritt 44 die Information 12 des Abstandserfassungssystems 4 modifiziert werden, so dass zur Bestimmung des Abstandes des Kraftfahrzeugs 20 zum immobilen Hindernis 38 Informationen, die einen bestimmten Winkelbereich betreffen (beispielsweise en Winkelbereich 36) ausgeblendet werden. Die solchermaßen modifizierten Informationen können in einem Schritt 46 dazu verwendet werden, den Abstand des Kraftfahrzeugs 20 zu dem immobilen Hindernis 38 zu bestimmen.

Wenn bei dem Schritt 42 eine Abfrage der Information 14 ergibt, dass kein Warnsignal ausgegeben werden soll (n = no), können die Informationen 12 unverändert bleiben. In diesem Fall wird in Schritt 46 der gleiche Abstand des Kraftfahrzeugs 20 zu dem immobilen Hindernis 38 ermittelt, wie vor der Abfrage 42.

In einem weiteren Schritt 48 kann abgefragt werden, ob der in Schritt 46 ermittelte Abstand einen bestimmten Mindestabstand unterschreitet. Ist dies der Fall (y=yes), wird - trotz Anliegens einer entsprechenden Information 16 des Teilsystems 10 des Warnsystems 6 - in einem Schritt 50 kein Warnsignal ausgegeben, da davon ausgegangen wird, dass das mobile Hindernis 40 bei Unterschreiten des Mindestabstands nicht zwischen das Fahrzeug 20 und das immobile Hindernis 38 geraten kann. Ergibt die Abfrage in Schritt 48, dass ein vorgebbarer Mindestabstand nicht unterschritten ist (n = no), wird in Schritt 52 ein Warnsignal ausgebeben. Dies kann beispielsweise durch Ausgabe von Warntönen oder in optischer Weise erfolgen.

## Patentansprüche

1. Verfahren zum Betrieb eines Assistenzsystems für Kraftfahrzeuge (20), mit einem Abstandserfassungssystem (4) zur Bestimmung des Abstandes eines Kraftfahrzeugs (20) zu immobilen Hindernissen (38), die relativ zum Kraftfahrzeug (20) in einem seitlichen Bereich angeordnet sind, und mit einem Warnsystem (6) zur Ausgabe eines Warnsignals bei Erfassung von mobilen Hindernissen (40), die relativ zum Kraftfahrzeug (20) in einem seitlichen und/oder rückwärtigen Bereich angeordnet sind, wobei zur Bestimmung des Abstandes des Kraftfahrzeugs (20) zu einem immobilen Hindernis (38) und/oder zur Ausgabe eines Warnsignals bei Erfassung eines mobilen Hindernisses (40) - die durch das Abstandserfassungssystem (4) und durch das Warnsystem (6) gewonnenen Informationen (12, 14, 16) miteinander verknüpft werden, **dadurch gekennzeichnet, dass** - bei Erfassung eines mobilen Hindernisses (40) durch das Warnsystem (6) - zur Bestimmung des Abstandes des Kraftfahrzeugs (20) zu einem immobilen Hindernis (38) nur diejenigen Informationen (12 bis 34) verwendet werden, die nicht den Winkelbereich (36) betreffen, in dem das Warnsystem (6) ein mobiles Hindernis (40) erfasst hat.

2. Verfahren nach Anspruch 1, **dadurch gekennzeichnet, dass** bei Unterschreitung eines Mindestabstandes des Kraftfahrzeugs (20) zu einem immobilen Hindernis (38) die Ausgabe eines Warnsignals unterdrückt wird.

3. Verfahren nach Anspruch 1, **dadurch gekennzeichnet, dass** die den Winkelbereich (36), in dem das Warnsystem (6) ein mobiles Hindernis (40) erfasst hat, betreffenden Informationen (14) der Auswerteeinheit (18) nicht zugeleitet werden.

4. Verfahren nach Anspruch 1 oder 3, **dadurch gekennzeichnet, dass** die den Winkelbereich (36), in dem das Warnsystem (6) ein mobiles Hindernis (40) erfasst hat, betreffenden Informationen (14) von der Auswerteeinheit (18) gefiltert werden.

## Claims

1. Method for operating an assistance system for motor vehicles (20), having a distance-detection system (4) for determining the distance between a motor vehicle (20) and immobile obstacles (38) which are arranged in a lateral region relative to the motor vehicle (20), and having a warning system (6) for outputting a warning signal when mobile obstacles (40) which are arranged in a lateral region and/or rear region relative to the motor vehicle (20) are detected, wherein, in order to determine the distance between the motor vehicle (20) and an immobile obstacle (38) and/or in order to output a warning signal when a mobile obstacle (40) is detected,
- the information items (12, 14, 16) which are acquired by the distance-detection system (4) and by the warning system (6) are logically combined with one another, **characterized in that**, when a mobile obstacle (40) is detected by the warning system (6), only those information items (12 to 34) which do not relate to the angular range (36) in which the warning system (6) has detected a mobile obstacle (40) are used for determining the distance between the motor vehicle (20) and an immobile obstacle (38).

2. Method according to Claim 1, **characterized in that**, when a minimum distance between the motor vehicle (20) and an immobile obstacle (38) is undershot, the outputting of a warning signal is suppressed.

3. Method according to Claim 1, **characterized in that** the information items (14) relating to the angular range (36) in which the warning system (6) has detected a mobile obstacle (40) are not fed to the evaluation unit (18).

4. Method according to Claim 1 or 3, **characterized in that** the information items (14) relating to the angular range (36) in which the warning system (6) has detected a mobile obstacle (40) are filtered by the evaluation unit (18).

## Revendications

1. Procédé pour faire fonctionner un système d'assistance pour véhicules automobiles (20), comprenant un système de détection de distance (4) pour déterminer la distance d'un véhicule automobile (20) à des obstacles immobiles (38), qui sont disposés dans une zone latérale par rapport au véhicule automobile (20), et comprenant un système d'avertissement (6) pour émettre un signal d'avertissement si des obstacles mobiles (40) sont détectés, lesquels sont disposés dans une zone latérale et/ou arrière par rapport au véhicule automobile (20), dans lequel, pour déterminer la distance du véhicule automobile (20) à un obstacle immobile (38), et/ou pour émettre un signal d'avertissement à la détection d'un obstacle mobile (40, les informations (12, 14, 16) obtenues par le système de détection de distance (4) et par le système d'avertissement (6) sont combinées, **caractérisé en ce que** lors de la détection d'un obstacle mobile (40) par le système d'avertissement (6) pour déterminer la distance du véhicule automobile (20) à un obstacle immobile (38), on n'utilise que les informations (12 à 34) qui ne concernent pas la plage angulaire (36), dans laquelle le système d'avertissement (6) a détecté un obstacle mobile (40).

2. Procédé selon la revendication 1, **caractérisé en ce que** dans le cas où une distance minimale du véhicule automobile (20) à un obstacle immobile (38) n'est plus respectée, l'émission d'un signal d'avertissement est supprimée.

3. Procédé selon la revendication 1, **caractérisé en ce que** les informations (14) concernant la plage angulaire (36) dans laquelle le système d'avertissement (6) a détecté un obstacle mobile (40), ne sont pas acheminées à l'unité d'analyse (18).

4. Procédé selon la revendication 1 ou 3, **caractérisé en ce que** les informations (14) concernant la plage angulaire (36) dans laquelle le système d'avertissement (6) a détecté un obstacle mobile (40), sont filtrées par l'unité d'analyse (18).
